# EUROPÄISCHE PATENTSCHRIFT

(11) **EP 0 515 416 B1**
(45) Veröffentlichungstag und Bekanntmachung des Hinweises auf die Patenterteilung: **13.04.1994**
(21) Anmeldenummer: 91903344.9
(22) Anmeldetag: 09.02.1991
(51) Int. Cl.: G01L 9/12

(54) **Integrierbarer, kapazitiver Drucksensor und Verfahren zum Herstellen desselben**
Integratable capacitative pressure sensor and process for its manufacture
Capteur capacitif intégrable de pression et son procédé de production

(30) Priorität: 12.02.1990 DE 4004179
(43) Veröffentlichungstag der Anmeldung: 02.12.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: ZIMMER, Günther, D-4100 Duisburg 29 (DE); EICHHOLZ, Jörg, D-4100 Duisburg 1 (DE); MOKWA, Wilfried, D-4150 Krefeld (DE); KANDLER, Michael, D-5042 Erfstadt (DE); MANOLI, Yiannakis, D-4330 Mülheim (DE)
(74) Vertreter: Schoppe, Fritz, Dipl.-Ing.
(86) Internationale Anmeldenummer: DE9100107
(87) Internationale Veröffentlichungsnummer: WO9112507

(56) Entgegenhaltungen:
- EP-A- 0 230 084
- Journal of Vacuum Science & Technology/A, Vol. 4, No. 3, May-June 1986, part 1, American Vacuum Society, (Woodbury, NY, US), K.D. Wise: "The role of thin films in integrated solid-state sensors", pages 617-622
- Journal of Vacuum Science & Technology/B, Vol. 6, No. 6, November/December 1988, American Vacuum Society, (Woodbury, NY, US), R.T. Howe: "Surface micromachining for microsensors and microactuators", pages 1809-1813
- J. Phys. E: Sci. Instrum. 20 (1987), pages 1469-1471: "A polysilicon-diaphragm-based pressure sensor technology", M.M. Farooqui and A.G.R. Evans

## Beschreibung

Die vorliegende Erfindung betrifft ein Verfahren zum Herstellen eines integrierbaren, kapazitiven Drucksensors nach dem Oberbegriff des Patentanspruchs 1, einen integrierbaren, kapazitiven Drucksensor nach dem Oberbegriff des Patentanspruchs 8 sowie eine integrierbare, kapazitive Drucksensoranordnung mit einem derartigen Drucksensor nach dem Oberbegriff des Patentanspruchs 12.

Ein Drucksensor sowie ein Verfahren zum Herstellen desselben ist bereits aus folgenden Fachveröffentlichungen bekannt:

H. Guckel und D. W. Burns, Planar Processed Polysilicon Sealed Cavities for Pressure Transducers Arrays", IEDM 1984, Seiten 223 bis 225.

H. Guckel und D. W. Burns, "A Technology for Integrated Transducers", Transducers '85, Philadelphia 1985, Seiten 90 bis 92.

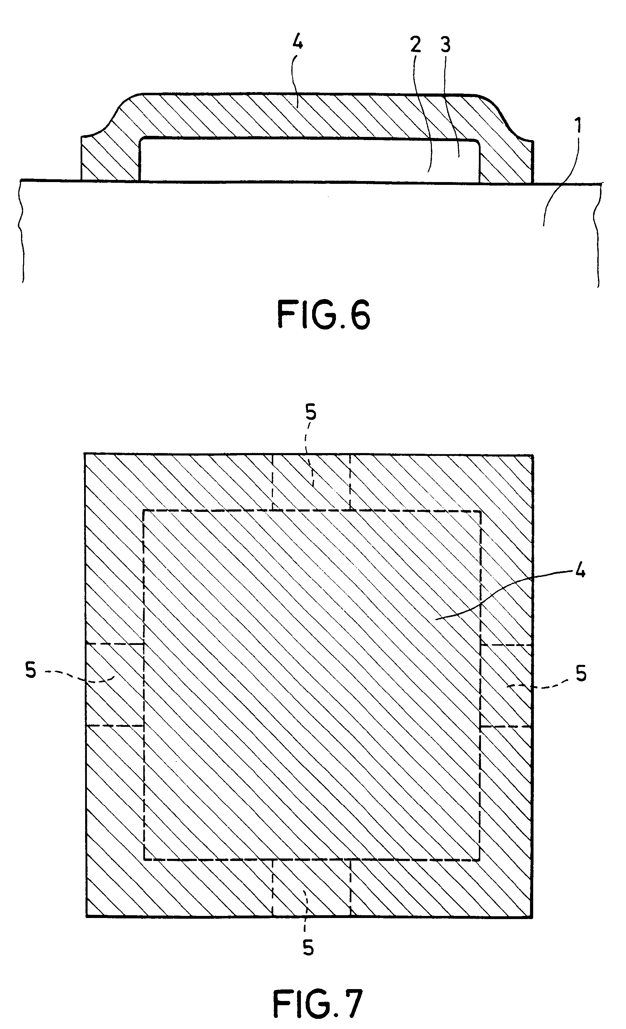

Ein derartiger Drucksensor nach dem Stand der Technik ist in Fig. 6 gezeigt. Bei dem Verfahren zum Herstellen dieses bekannten Drucksensors wird zunächst auf ein Siliziumsubstrat 1 eine Abstandshalterschicht 2, die auch als Spacer bezeichnet wird, aufgebracht. Diese Abstandshalterschicht 2 definiert einen späteren Drucksensorhohlraum 3. Auf die Abstandshalterschicht 2 wird eine Polysiliziumschicht 4 abgeschieden.

Fig. 7 zeigt eine Draufsicht auf den Drucksensor gemäß Fig. 6. Wie insbesondere in dieser Fig. 7 deutlich zu erkennen ist, weist die Abstandshalterschicht 2 sich durch die Polysiliziumschicht 4 erstreckende Fortsätze auf, durch die Ätzkanäle 5 festgelegt werden, die ein Herausätzen der Abstandshalterschicht 2 unter der Polysiliziumschicht 4 ermöglichen. Nach dem Herausätzen der Abstandshalterschicht 2 werden die Ätzkanäle 5 verschlossen. Je nach Prozeßführung verbleibt in dem Drucksensorhohlraum 3 ein Vakuum oder ein definiert einstellbarer Gasdruck. Die Polysiliziumschicht 4 weist eine membranartige Struktur auf, die durch äußeren Druck verformbar ist. Der Grad der Verformung kann durch aufgebrachte piezoresistive Widerstände in ein elektrisches Signal umgewandelt werden.

Ein Drucksensor und ein Verfahren zur Herstellung eines solchen Drucksensors gemäß den Oberbegriffen der Ansprüche 1 und 8 ist aus folgender Fachveröffentlichung bekannt:

M. M. Farooqui and A. G. R. Evans, "A Polysilicon-Diaphragm - Based Pressure Sensor Technology", J. Phys. E. Sci. Inst. 20 (1987), Seiten 1469 bis 1471.

Dieses Dokument erläutert die Möglichkeit, die Verformung der durch die Polysiliziumschicht 4 gebildeten Membran kapazitiv zu erfassen.

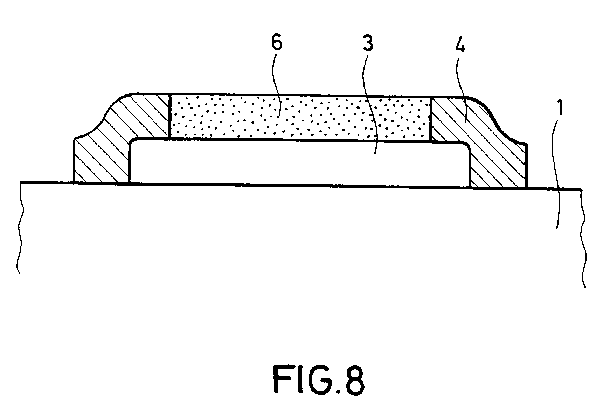

Zur kapazitiven Erfassung der Deformation der membranartigen Polysiliziumschicht 4 kann diese durch Implantation im Bereich eines Membrangebietes 6 hochdotiert werden, wodurch eine Gegenelektrode zu der durch das Substrat 1 gebildeten Elektrode erzeugt wird, wie dies insbesondere in Fig. 8 verdeutlicht ist.

Jedoch ist ein derartiger, bekannter Drucksensor nicht zu CMOS-Schaltkreisen kompatibel. Ferner ist die Kapazität des bekannten Drucksensors abhängig von der angelegten Spannung, da zwischen der Polysiliziumschicht 4 und dem Siliziumsubstrat 1 ein nicht Ohm'scher Widerstand entsteht. Ferner muß die Ladung des bekannten Drucksensors aufgrund des Widerstandes, der durch den nicht implantierten Bereich der Polysiliziumschicht 4 gebildet wird, mit einer bestimmten Frequenz erfaßt werden. Zum Erfassen von Druckänderungen mittels niederfrequent abtastender Ausleseschaltungen ist daher der bekannte Drucksensor nicht geeignet.

Ebenfalls ist der bekannte Drucksensor nicht für eine monolithische Integration mit weiteren elektronischen Schaltungselementen geeignet.

Aus der DE 37 23 561 A1 ist eine kapazitive Drucksensorstruktur bekannt, die eine mehrschichtige, relativ komplizierte Struktur hat. Auf einem Substrat ist eine untere Isolationsschicht ausgebildet, auf der eine Membrantragschicht angeordnet ist, welche einen Drucksensorhohlraum umschließt. Die Membrantragschicht ist zum Abschluß des Drucksensorhohlraumes mit einer Deckschicht überzogen. Lediglich die Membrantragschicht, nicht jedoch die Deckschicht besteht aus einem polykristallinem Halbleitermaterial. Ein Halbleiterbereich, der im wesentlichen mit den Abmessungen des darüberliegenden Drucksensorhohlraumes übereinstimmt, ist innerhalb des Substrates durch eine Dotierung festgelegt, die entgegengesetzt zur Dotierung des Substrates ist.

Bei einem solchen Drucksensor wird die Gesamtkapazität des Sensorelementes einerseits durch eine druckabhängige Kapazität im Membranbereich und andererseits durch eine druckunabhängige Kapazität festgelegt, die im wesentlichen durch die Kapazität der Membranauflage gegenüber dem Substrat festgelegt ist. Bedingt durch den geringen Abstand des Membranauflagebereichs gegenüber dem Substrat beträgt die druckunabhängige Kapazität bezogen auf den Gesamtkapazitätswert etwa 95 Prozent. Da beim Gegenstand der Fig. 1A dieser DE 37 23 561 A1 der Membranauflagebereich teilweise oberhalb des nicht-dotierten Bereiches des Substrates liegt, kann eine Abhängigkeit von der Temperatur und der elektrischen Spannung des druckunabhängigen Kapazitätsanteiles nur dadurch reduziert werden, daß der leitfähige Membranbereich von der Polysiliziumtragschicht durch eine obere Isolationsschicht isoliert wird. Wollte man bei dieser Drucksensorstruktur den gesamten Drucksensorbereich, der oberhalb des Substrates liegt und der den Drucksensorhohlraum festlegt, aus einem einzigen Material fertigen, so ergäbe sich aus den genannten Gründen eine zu starke Temperaturabhängigkeit und Spannungsabhängigkeit der hohen, druckunabhängigen Kapazitätskomponente.

Ausgehend von diesem Stand der Technik liegt der vorliegenden Erfindung die Aufgabe zugrunde, ein Verfahren zum Herstellen eines Drucksensors sowie einen Drucksensor der eingangs genannten Art so weiterzubilden, daß bei Vereinfachung der Drucksensorstruktur bzw. bei Vereinfachung des Herstellungsverfahrens eine verbesserte Druckmeßgenauigkeit erzielt wird.

Diese Aufgabe wird durch ein Verfahren gemäß Patentanspruch 1 sowie durch einen Drucksensor gemäß Patentanspruch 8 gelöst.

Bei dem nach dem Verfahren gemäß Anspruch 1 hergestellten Drucksensor sowie bei dem Drucksensor mit den im Patentanspruch 8 aufgeführten Merkmalen ist es möglich, den Teil des Sensorkörpers, der den Drucksensorhohlraum umschließt, durch Abscheiden einer einzigen polykristallinen Halbleiterschicht zu erzeugen, ohne daß dies zu einer zu großen temperaturabhängigen und spannungsabhängigen druckunabhängigen Kapazitätskomponente führen würde, da sich die polykristalline Halbleiterschicht oberhalb der Isolatorschicht auf dem isolierten Halbleiterbereich befindet.

Gemäß einem weiteren Aspekt liegt der Erfindung die Aufgabe zugrunde, für einen derartigen Drucksensor eine für eine genaue Druckmessung geeignete Drucksensoranordnung anzugeben. Diese Teilaufgabe wird durch eine integrierbare Drucksensoranordnung gemäß Anspruch 12 gelöst.

Bevorzugte Weiterbildungen der Erfindung sind in den Unteransprüchen angegeben.

Nachfolgend werden unter Bezugnahme auf die beiliegenden Zeichnungen bevorzugte Ausführungsformen des erfindungsgemäßen Drucksensors sowie von erfindungsgemäßen Drucksensoranordnungen näher erläutert. Es zeigen:
- Fig. 1A: eine Querschnittsdarstellung einer ersten Ausführungsform des erfindungsgemäßen Drucksensors;
- Fig. 1B: eine Querschnittsdarstellung einer zweiten Ausführungsform des erfindungsgemäßen Drucksensors;
- Fig. 1C: eine Querschnittsdarstellung einer dritten Ausführungsform des erfindungsgemäßen Drucksensors;
- Fig. 2: eine Draufsicht auf eine Ausführungsform einer erfindungsgemäßen Drucksensoranordnung;
- Fig. 3: eine Schnittdarstellung einer weiteren Ausführungsform einer erfindungsgemäßen Drucksensoranordnung;
- Fig. 4 und 5: schaltungsmäßige Ausführungsbeispiele der erfindungsgemäßen Drucksensoranordnung;
- Fig. 6: eine Querschnittsdarstellung durch einen bekannten Drucksensor;
- Fig. 7: eine Draufsichtdarstellung des in Fig. 1 gezeigten, bekannten Drucksensors; und
- Fig. 8: eine Querschnittsdarstellung eines weiteren, bekannten Drucksensors.

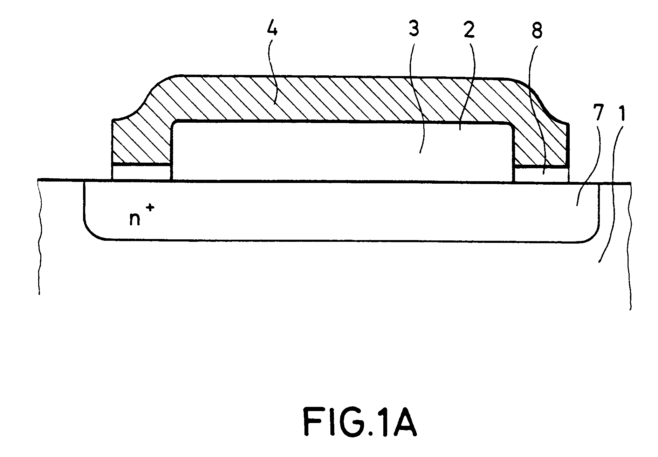

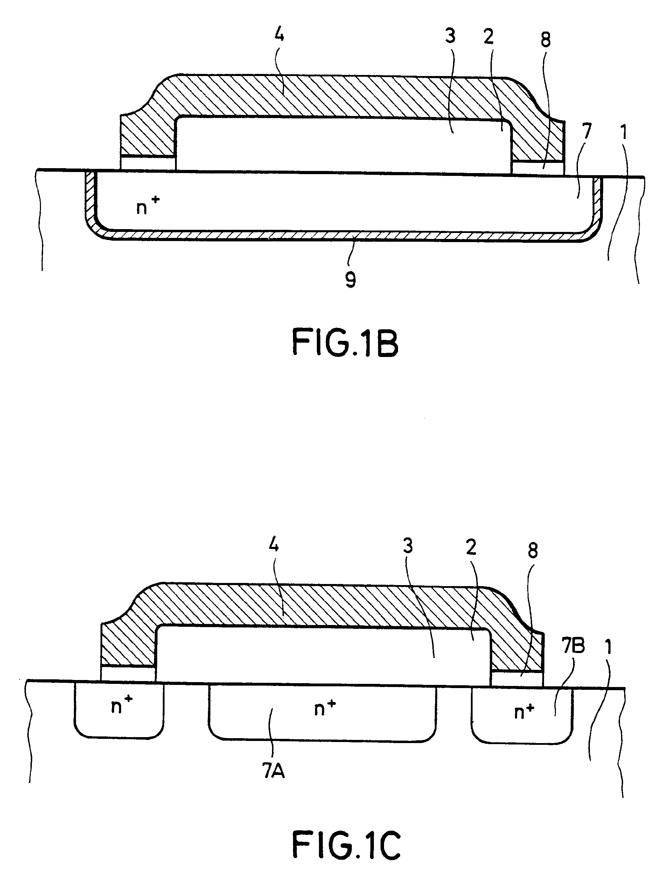

In den Fig. 1 bis 5 bezeichnen Bezugszeichen, die mit den in den Fig. 6 bis 8 verwendeten Bezugszeichen übereinstimmen, gleiche oder ähnliche Teile, so daß eine erneute Erläuterung dieser Teile unterbleiben kann.

Das Verfahren zum Herstellen der in Fig. 1A gezeigten Ausführungsform des erfindungsgemäßen Drucksensors hebt sich von dem eingangs beschriebenen Herstellungsverfahren nach dem Stand der Technik dadurch ab, daß vor dem Verfahrensschritt des Aufbringens der Abstandshalterschicht 2 das Siliziumsubstrat 1 innerhalb eines Dotierungsbereiches 7 mit einer Dotierung versehen wird, die entgegengesetzt zum Leitfähigkeitstyp des Substrates gewählt ist. Bei dem gezeigten p-Substrat 1 wird demgemäß ein n⁺-Dotierungsbereich 7 erzeugt, um einerseits eine gut leitfähige Elektrode zu erzeugen, und um andererseits diese Elektrode, die durch den Dotierungsbereich 7 gebildet ist, durch den pn-Übergang gegenüber dem Siliziumsubstrat 1 zu isolieren. Anschließend wird eine Isolatorschicht 8 auf den so gebildeten Dotierungsbereich 7 aufgebracht, welche beispielsweise aus Si₃N₄ bestehen kann. Auf die Isolatorschicht 8 werden in der eingangs beschriebenen Art die Abstandshalterschicht 2 und die Polysiliziumschicht 4 aufgebsacht, woraufhin die Abstandshalterschicht durch Ätzen entfernt wird. Die eingangs beschriebenen Ätzkanäle werden anschließend verschlossen.

Wie in Fig. 1B gezeigt ist, kann anstelle der Erzeugung eines pn-Überganges zum Isolieren des Bereiches 7 gegenüber dem Substrat 1 auch durch Implantation von geeigneten Implantationsstoffen eine vergrabene Isolationsschicht 9 in dem Halbleitersubstrat 1 erzeugt werden, die den Bereich 7 isoliert. Die vergrabene Isolationsschicht 9 kann aus SiO₂ oder aus Si₃N₄ bestehen. Bei einem derartigen Isolieren des Bereiches 7 gegenüber dem Substrat 1 wird nach der Sauerstoffimplantation der Bereich 7 thermisch ausgeheilt.

Fig. 1C zeigt eine dritte Ausführungsform des erfindungsgemäßen Drucksensors, die sich von der Ausführungsform gemäß Fig. 1A dadurch abhebt, daß der Dotierungsbereich 7 unterteilt ist in einen ersten Dotierungsbereich 7A, der eine Elektrode der Drucksensorkapazität bildet, sowie in einen zweiten Dotierungsbereich 7B, der lediglich unterhalb des Auflagebereiches der Polysiliziumschicht 4 angeordnet ist. Durch diese Strukturierung des Dotierungsbereiches 7 wird erreicht, daß die Auflagekapazität nicht mehr im Signalpfad liegt, so daß die Einflüsse dieser druckunabhängigen Auflagekapazität deutlich vermindert werden können.

Bei dem erfindungsgemäßen Drucksensor ist es sinnvoll, die Dotierung des Dotierungsbereiches 7, 7B unterhalb des Auflagebereiches der polykristallinen Halbleiterschicht 4 so hoch zu wählen, daß sich ein metallisches Verhalten im Bereich der Entartung ergibt, wodurch die Einflüsse der temperaturabhängigen Kapazitätsänderung sowie der spannungsabhängigen Kapazitätsänderung der druckunabhängigen Kapazitätskomponente des Sensors weiter vermindert werden.

In jedem Fall bildet die erfindungsgemäße Drucksensorstruktur einen potentialfreien Kondensator, der mit CMOS-Schaltungselementen kompatibel ist und eine Integration innerhalb einer CMOS-Schaltung ermöglicht. Die Kapazität des erfindungsgemäßen Drucksensors ist nur vom Druck und nicht von der angelegten Spannung abhängig. Aufgrund der vollständigen Isolation der Polysiliziumschicht 4 gegenüber dem Siliziumsubstrat 1 kann die Kapazität des Drucksensors sowohl in einem quasistatischen Zustand als auch mit hoher Auslesefrequenz erfaßt werden.

Bei dem erfindungsgemäßen Drucksensor kann die gesamte Polysiliziumschicht 4 mit einer Dotierung zur Erhöhung ihrer Leitfähigkeit versehen sein. Eine im Stand der Technik erforderliche Abgrenzung des Dotierungsbereiches ist bei dem erfindungsgemäßen Drucksensor möglich, jedoch nicht erforderlich.

Typischerweise liegt die Nutzkapazität eines einzelnen, erfindungsgemäßen Drucksensors, wie er in den Fig. 1A, 1B, 1C gezeigt ist, bei wenigen Femtofarad. Bei der erfindungsgemäßen Struktur des Drucksensors ist es jedoch möglich, eine Mehrzahl derartiger Drucksensoren auf einem gemeinsamen Siliziumsubstrat 1 feldartig anzuordnen.

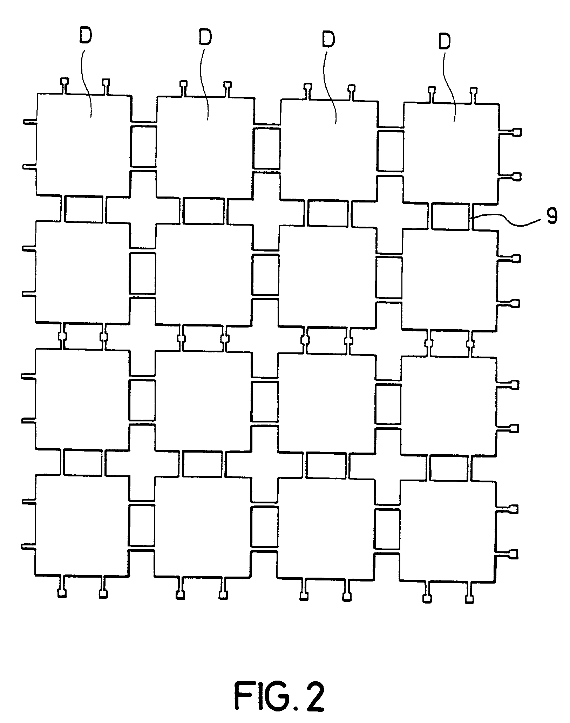

Wie in Fig. 2 gezeigt ist, können derartige, feldförmig angeordnete Drucksensoren D untereinander durch Verbindungsarme 9 der Polysiliziumschicht 4 verbunden und somit zur Erhöhung der Kapazität parallel geschaltet werden, um ein höheres Ausgangssignal zu erreichen.

Je nach Art der gewählten Verschaltung ist es möglich, auch den Kapazitätswert eines jeden einzelnen Drucksensors D bei einer derartigen feldartigen Anordnung getrennt zu erfassen, um ortsaufgelöst Druckverteilungen zu messen oder um ein redundantes Druckmeßsystem aufzubauen. Hierbei können defekte Drucksensoren erfaßt werden, so daß diese nicht mehr zum Gesamtsignal beitragen.

Ebenfalls können auf einem Chip bei einer derartigen feldartigen Anordnung die Durchmesser und/oder die Membrandicken von Drucksensor zu Drucksensor variieren, so daß verschiedene Druckbereiche mit den Sensoren eines einzigen Chips erfaßt werden können.

Der erfindungsgemäße Drucksensor weist einen druckunabhängigen sowie einen druckabhängigen Kapazitätsanteil auf. Der druckunabhängige Kapazitätsanteil ist beispielsweise durch Leiterbahnkapazitäten sowie die Kapazität zwischen dem Fußpunkt der Polysiliziumschicht 4 und dem Siliziumsubstrat 1 gebildet. Ferner ist es möglich, daß der erfindungsgemäße Drucksensor druckunabhängige Kapazitätsänderungen aufgrund von Temperatureinflüssen erfährt. Die genannten druckunabhängigen Kapazitätsanteile oder Kapazitätsänderungen können bei einer auf dem erfindungsgemäßen Drucksensor beruhenden Drucksensoranordnung mit einem Drucksensor und einem Referenzelement kompensiert werden.

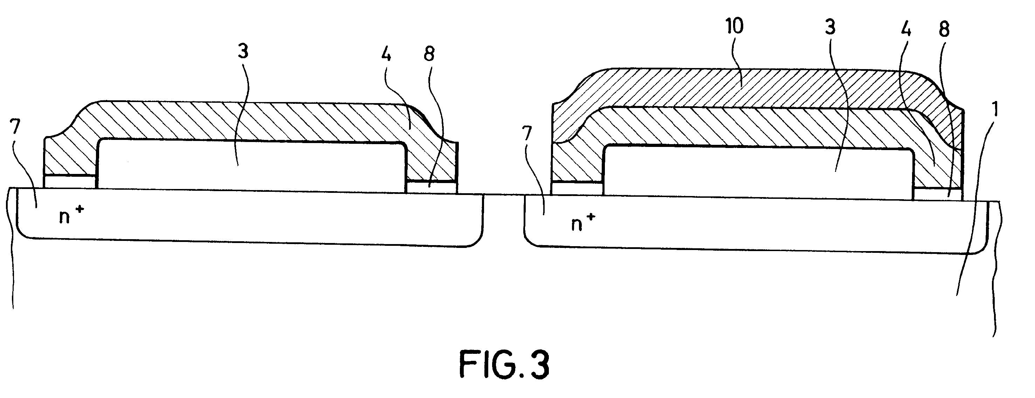

Fig. 3 zeigt eine derartige integrierbare, kapazitive Drucksensoranordnung, die linksseitig einen Drucksensor mit der bereits beschriebenen Struktur und rechtsseitig ein kapazitives Referenzelement aufweist. Das erfindungsgemäße Referenzelement unterscheidet sich lediglich dadurch von dem erfindungsgemäßen Drucksensor, daß dieses eine Polysiliziumschicht 4 mit erhöhter Biegesteifigkeit aufweist. Diese erhöhte Biegesteifigkeit kann bei dem gezeigten Ausführungsbeispiel dadurch herbeigeführt werden, daß auf die Polysiliziumschicht 4 des Referenzelementes eine weitere Schicht 10 aufgebracht wird. Dies kann beispielsweise durch Abscheiden von Polysilizium geschehen. Ebenfalls kann die Polysiliziumschicht 4 des Referenzelementes mit einer größeren Dicke als diejenige des Drucksensors ausgeführt werden.

Eine Drucksensoranordnung mit einem derartigen Drucksensor und Referenzelement, wie sie in Fig. 3 dargestellt ist, ermöglicht eine Druckmessung durch Erfassung der Kapazitätsdifferenz zwischen der Kapazität des Drucksensors und derjenigen des Referenzelementes. Hierdurch werden alle nicht druckabhängigen Kapazitäten und Kapazitätsänderungen kompensiert. Da Drucksensor und Referenzelement auf dem gleichen Substrat 1 mit gleichen Herstellungsschritten aufgebaut werden können, kommt es zu einer bestmöglichen Annäherung der Struktur des Drucksensors und des zugehörigen Referenzelementes.

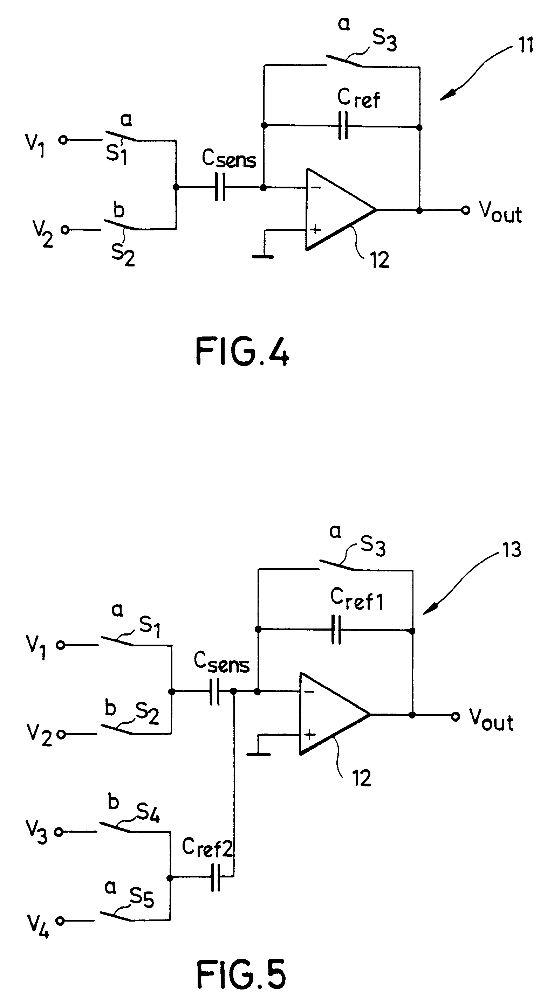

Zur Messung von Drucken mittels eines Drucksensor-Referenzelement-Paares eignen sich vorzugsweise sogenannte Schalter-Kondensator-Kapazitätsmeßschaltungen, wie sie in den Fig. 4 und 5 gezeigt sind.

Die in Fig. 4 gezeigte Schalter-Kondensator-Kapazitätsmeßschaltung ist in ihrer Gesamtheit mit dem Bezugszeichen 11 bezeichnet und umfaßt einen Operationsverstärker 12, dessen nicht-invertierender Eingang mit Masse verbunden ist. Der Drucksensor Cₛₑₙₛ ist in einem ersten Schaltzustand a über einen ersten Schalter S₁ an seiner ersten Elektrode mit einem ersten Potential V₁ verbunden und ist in einem zweiten Schaltzustand b über einen zweiten Schalter S₂ an seiner ersten Elektrode mit einem zweiten Potential V₂ verbunden. Zwischen dem invertierenden Eingang und dem Ausgang des Operationsverstärkers liegt das Referenzelement C_{ref}, zu dem parallel ein dritter Schalter S₃ geschaltet ist, der in dem ersten Schaltzustand a geschlossen ist und in dem zweiten Schaltzustand b geöffnet ist.

Für einen Fachmann ist es offensichtlich, daß die Ausgangsspannung Vₒᵤₜ der Schalter-Kondensator-Kapazitätsmeßschaltung proportional zum Quotienten der Kapazität des Drucksensors Cₛₑₙₛ zu derjenigen des Referenzelementes C_{ref} ist.

In Abweichung zu der Ausführungsform der in Fig. 4 gezeigten Schalter-Kondensator-Kapazitätsmeßschaltung können der dort gezeigte Drucksensor Cₛₑₙₛ und das dort gezeigte Referenzelement C_{ref} vertauscht werden. Entsprechend ergibt sich eine reziproke Abhängigkeit der Ausgangsspannung Vₒᵤₜ der Schaltung 11.

Fig. 5 zeigt eine andere Ausführungsform der Schalter-Kondensator-Kapazitätsmeßschaltung, die hier in ihrer Gesamtheit mit dem Bezugszeichen 13 bezeichnet ist. Mit der Ausführungsform gemäß Fig. 4 übereinstimmende Schaltungsteile und Schaltzustände sind mit dem gleichen Bezugszeichen bezeichnet. Die nachfolgende Beschreibung kann sich daher darauf beschränken, die Abweichungen dieser Schaltung 13 gegenüber derjenigen 11 gemäß Fig. 4 zu erläutern. Bei dieser Ausführungsform steht ein zweites Referenzelement C_{ref2} mit seiner zweiten Elektrode mit dem invertierenden Eingang des Operationsverstärkers 12 in Verbindung. Das zweite Referenzelement C_{ref2} wird an seiner ersten Elektrode in einem ersten Schaltzustand a über einen fünften Schalter S₅ mit einem vierten Potential V₄ beaufschlagt, während es in einem zweiten Schaltzustand b über einen vierten Schalter S₄ mit einem dritten Potential V₃ beaufschlagt wird. Die Ausgangsspannung Vₒᵤₜ dieser Schalter-Kondensator-Kapazitätsmeßschaltung 13 ist proportional zum Quotienten der Kapazität des Drucksensors Cₛₑₙₛ zu derjenigen des ersten Referenzelementes C_{ref1} vermindert um den Quotienten der Kapazität des zweiten Referenzelementes C_{ref2} zu derjenigen des ersten Referenzelementes C_{ref1}. Bei einer derartigen Schaltung fallen additive Kapazitätsterme heraus, so daß die Ausgangsspannung lediglich von dem zu messenden Druck abhängig ist.

## Patentansprüche

1. Verfahren zum Herstellen eines integrierbaren, kapazitiven Drucksensors, ausgehend von einem Halbleitersubstrat, mit folgenden Verfahrensschritten:
- Erzeugen einer einen späteren Drucksensorhohlraum (3) festlegenden Abstandshalterschicht (2), die oberhalb eines Halbleiterbereiches (7) des Halbleitersubstrates (1) liegt;
- Abscheiden einer polykristallinen Halbleiterschicht (4) in der Weise, daß diese die Abstandshalterschicht (2) zumindest teileweise überdeckt;
- Dotieren der abgeschiedenen, polykristallinen Halbleiterschicht (4) zumindest innerhalb eines oberhalb der Abstandshalterschicht (2) liegenden, membranartigen Gebietes, und
- Entfernen der Abstandshalterschicht (2) durch Ätzen,
gekennzeichnet durch folgende Verfahrensschritte:
- Isolieren des Halbleiterbereiches (7) gegenüber dem Halbleitersubstrat (1), und
- Aufbringen einer Isolatorschicht (8) auf den isolierten Halbleiterbereich (7),
wobei die polykristalline Halbleiterschicht (4) auf der Isolatorschicht (8) oberhalb des isolierten Halbleiterbereiches (7) angeordnet wird.

2. Verfahren nach Anspruch 1, dadurch gekennzeichnet,
daß der Verfahrensschritt des Isolierens des Halbleiterbereiches (7) gegenüber dem Halbleitersubstrat (1) die Erzeugung eines pn-Überganges in dem Halbleitersubstrat (1) durch entsprechendes Dotieren des Halbleiterbereiches (7) umfaßt.

3. Verfahren nach Anspruch 1 oder 2, dadurch gekennzeichnet,
daß der Verfahrensschritt des Isolierens des Halbleiterbereiches (7) das Implantieren von zur Isolation geeigneten Implantationsstoffen zum Erzeugen einer vergrabenen Isolationsschicht im Halbleitersubstrat (1) umfaßt.

4. Verfahren nach Anspruch 3, dadurch gekennzeichnet,
daß die Implantationsstoffe Sauerstoff oder Stickstoff umfassen.

5. Verfahren nach Anspruch 3 oder 4, gekennzeichnet durch
den sich an Verfahrensschritt des Implantierens anschließenden Verfahrensschritt des thermischen Ausheilens des durch die vergrabene Isolationsschicht definierten Halbleiterbereiches (7).

6. Verfahren nach einem der Ansprüche 1 bis 5, dadurch gekennzeichnet,
daß die Isolatorschicht (8) Si₃N₄ aufweist.

7. Verfahren nach einem der Ansprüche 1 bis 6, dadurch gekennzeichnet,
daß die Abstandshalterschicht (2) derart ausgebildet ist, daß sie sich durch die polykristalline Halbleiterschicht (4) zur Festlegung von wenigstens einem Ätzkanal (5) erstreckt.

8. Integrierbarer, kapazitiver Drucksensor mit einem Halbleitersubstrat (1) und einer mit dem Halbleitersubstrat (1) einen Drucksensorhohlraum (3) festlegenden polykristallinen Halbleiterschicht (4), die zumindest innerhalb eines oberhalb des Drucksensorhohlraumes liegenden, membranartigen Gebietes (6) eine Dotierung aufweist,
dadurch gekennzeichnet
daß eine Isolatorschicht (8) zwischen der polykristallinen Halbleiterschicht (4) einerseits und einem unterhalb der polykristallinen Halbleiterschicht (4) liegenden Halbleiterbereich (7) andererseits liegt, und
daß der Halbleiterbereich (7) gegenüber dem Halbleitersubstrat (1) isoliert ist, so daß die den Drucksensorhohlraum (3) festlegende polykristalline Halbleiterschicht (4) auf der Isolatorschicht (8) oberhalb des isolierten Halbleiterbereiches (7) angeordnet ist.

9. Drucksensor nach Anspruch 8, dadurch gekennzeichnet,
daß der Halbleiterbereich (7) zur Erzeugung eines pn-Überganges entgegengesetzt zu dem Halbleitersubstrat (1) dotiert ist.

10. Drucksensor nach Anspruch 8 oder 9, dadurch gekennzeichnet,
daß eine vergrabene Isolationsschicht zwischen dem Halbleiterbereich (7) und dem Halbleitersubstrat (1) liegt.

11. Drucksensor nach einem der Ansprüche 8 bis 10, dadurch gekennzeichnet,
daß das Halbleitersubstrat (1) Silizium, daß die polykristalline Halbleiterschicht (4) Polysilizium und daß die Isolatorschicht (8) Si₃N₄ aufweist.

12. Integrierbare, kapazitive Drucksensoranordnung mit einem kapazitiven Drucksensor nach einem der Ansprüche 8 bis 11, gekennzeichnet durch
ein kapazitives Referenzelement, dessen Struktur mit derjenigen des kapazitiven Drucksensors mit Ausnahme einer höheren Biegesteifigkeit der den Referenzelementhohlraum (3) überspannenden polykristallinen Halbleiterschicht (4) übereinstimmt.

13. Drucksensoranordnung nach Anspruch 12, dadurch gekennzeichnet,
daß die polykristalline Halbleiterschicht (4) des Referenzelementes eine größere Dicke als diejenige der polykristallinen Halbleiterschicht (4) des kapazitiven Drucksensors aufweist.

14. Drucksensoranordnung nach Anspruch 12 oder 13, dadurch gekennzeichnet,
daß die polykristalline Halbleiterschicht (4) des Referenzelementes mit einer weiteren Schicht (10) zur Erhöhung ihrer Biegesteifigkeit verstärkt ist.

15. Drucksensoranordnung nach Anspruch 12 oder 13, gekennzeichnet durch
eine Mehrzahl von feldartig auf einem gemeinsamen Halbleitersubstrat (1) angeordneten Drucksensor-Referenzelement-Paaren.

16. Drucksensoranordnung nach einem der Ansprüche 12 bis 15, gekennzeichnet durch
eine Schalter-Kondensator-Kapazitätsmeßschaltung (11, 13), die den Drucksensor und das Referenzelement umfaßt.

17. Drucksensoranordnung nach Anspruch 16, dadurch gekennzeichnet,
daß der Drucksensor in einem ersten Schaltzustand (a) der Schalter-Kondensator-Kapazitätsmeßschaltung (11, 13) an einer ersten Elektrode von einem ersten Potential (V₁) und in einem zweiten Schaltzustand (b) von einem zweiten Potential (V₂) beaufschlagt wird,
daß der Drucksensor mit seiner zweiten Elektrode mit dem invertierenden Eingang (-) eines Operationsverstärkers (12) der Schalter-Kondensator-Kapazitätsmeßschaltung (11, 13) verbunden ist,
daß das Referenzelement zwischen dem invertierenden Eingang (-) des Operationsverstärkers (12) und dessen Ausgang liegt und bei einem der beiden Schaltzustände (a, b) entladen wird, und
daß der nicht-invertierende Eingang (+) des Operationsverstärkers (12) mit einem Bezugspotential (Masse) beaufschlägt ist.

18. Drucksensoranordnung nach Anspruch 16, dadurch gekennzeichnet,
daß das Referenzelement in einem ersten Schaltzustand (a) der Schalter-Kondensator-Kapazitätsmeßschaltung (11, 13) an einer ersten Elektrode von einem ersten Potential (V₁) und in einem zweiten Schaltzustand (b) von einem zweiten Potential (V₂) beaufschlagt wird,
daß das Referenzelement mit seiner zweiten Elektrode mit dem invertierenden Eingang (-) eines Operationsverstärkers (12) der Schalter-Kondensator-Kapazitätsmeßschaltung (11, 13) verbunden ist,
daß der Drucksensor zwischen dem invertierenden Eingang (-) des Operationsverstärkers (12) und dessen Ausgang liegt und bei einem der beiden Schaltzustände (a, b) entladen wird, und
daß der nicht-invertierende Eingang (+) des Operationsverstärkers (12) mit einem Bezugspotential (Masse) beaufschlagt ist.

19. Drucksensoranordnung nach Anspruch 16, dadurch gekennzeichnet,
daß der Drucksensor in einem ersten Schaltzustand (a) der Schalter-Kondensator-Kapazitätsmeßschaltung (13) an einer ersten Elektrode von einem ersten Potential (V₁) und in einem zweiten Schaltzustand (b) von einem zweiten Potential (V₂) beaufschlagt wird,
daß das Referenzelement in einem ersten Schaltzustand (a) der Schalter-Kondensator-Kapazitätsmeßschaltung (13) an einer ersten Elektrode von einem vierten Potential (V₄) und in einem zweiten Schaltzustand (b) von einem dritten Potential (V₃) beaufschlagt wird,
daß die jeweilige zweite Elektrode des Drucksensors und des Referenzelementes mit dem nicht-invertierenden Eingang (-) eines Operationsverstärkers verbunden sind,
daß ein weiteres kapazitives Referenzelement zwischen dem invertierenden Eingang (-) des Operationsverstärkers (12) und dessen Ausgang liegt, und
daß der nicht-invertierende Eingang (+) des Operationsverstärkers (12) mit einem Bezugspotential (Masse) beaufschlagt ist.

## Claims

1. A process for manufacturing an integratable capacitative pressure sensor comprising the following steps, starting from a semiconductor substrate:
- producing a spacer film (2), which determines a future pressure sensor cavity (3) and which is located above a semiconductor zone (7) of the semiconductor substrate (1);
- precipitating a polycrystalline semiconductor film (4) in such a way that this polycrystalline semiconductor film covers the spacer film (2) at least partially;
- doping the precipitated, polycrystalline semiconductor film (4) at least within a diaphragmlike area located above the spacer film (2), and
- removing the spacer film (2) by etching,
characterized by the following steps:
- insulating the semiconductor zone (7) from the semiconductor substrate (1), and
- applying an insulator film (8) on the insulated semiconductor zone (7),
the polycrystalline semiconductor film (4) being located on the insulator film (8) above the insulated semiconductor zone (7).

2. A process according to claim 1, characterized in that
the step of insulating the semiconductor zone (7) from the semiconductor substrate (1) includes the production of a pn-junction in said semiconductor substrate (1) by adequate doping of said semiconductor zone (7).

3. A process according to claim 1 or 2, characterized in that
the step of insulating the semiconductor zone (7) includes the implantation of implantation substances suitable for insulation so as to produce a buried insulation film in said semiconductor substrate (1).

4. A process according to claim 3, characterized in that
the implantation substances comprise oxygen or nitrogen.

5. A process according to claim 3 or 4, characterized by
the step of thermally annealing the semiconductor zone (7) defined by the buried insulation film, said step being carried out after the implantation step.

6. A process according to one of the claims 1 to 5, characterized in that
the insulator film (8) includes Si₃N₄.

7. A process according to one of the claims 1 to 6, characterized in that
the spacer film (2) is constructed such that it extends through the polycrystalline semiconductor film (4) for defining at least one etching passage (5).

8. An integratable capacitative pressure sensor comprising a semiconductor substrate (1) and a polycrystalline semiconductor film (4), which defines together with said semiconductor substrate (1) a pressure sensor cavity (3) and which is provided with a dopant at least within a diaphragmlike area (6) located above said pressure sensor cavity,
characterized in that
an insulator film (8) is interposed between the polycrystalline semiconductor film (4) on the one hand and a semiconductor zone (7), which is located below said polycrystalline semiconductor film (4), on the other, and
that the semiconductor zone (7) is insulated from the semiconductor substrate (1) so that the polycrystalline semiconductor film (4) defining the pressure sensor cavity (3) is arranged on the insulator film (8) above said insulated semiconductor zone (7).

9. A pressure sensor according to claim 8, characterized in that
for producing a pn-junction, the semiconductor zone (7) is doped opposite to the semiconductor substrate (1).

10. A pressure sensor according to claim 8 or 9, characterized in that
a buried insulation film is positioned between the semiconductor zone (7) and the semiconductor substrate (1).

11. A pressure sensor according to one of the claims 8 to 10, characterized in that
the semiconductor substrate (1) includes silicon, that the polycrystalline semiconductor film (4) includes polysilicon and that the insulator film (8) includes Si₃N₄.

12. An integratable capacitative pressure sensor array including a capacitative pressure sensor according to one of the claims 8 to 11, characterized by
a capacitative reference element whose structure corresponds to that of the capacitative pressure sensor with the exception of a higher flexural strength of the polycrystalline semiconductor film (4) spanning the reference element cavity (3).

13. A pressure sensor array according to claim 12, characterized in that
the thickness of the polycrystalline semiconductor film (4) of the reference element exceeds the thickness of the polycrystalline semiconductor film (4) of the capacitative pressure sensor.

14. A pressure sensor array according to claim 12 or 13, characterized in that
the polycrystalline semiconductor film (4) of the reference element is reinforced by an additional film (10) so as to increase its flexural strength.

15. A pressure sensor array according to claim 12 or 13, characterized by
a plurality of pressure sensor/reference element pairs arranged on a common semiconductor substrate (1) in a fieldlike array.

16. A pressure sensor array according to one of the claims 12 to 15, characterized by
a capacitance measuring circuit of the switched capacitor type (11, 13) comprising the pressure sensor and the reference element.

17. A pressure sensor array according to claim 16, characterized in that
a first electrode of the pressure sensor is acted upon by a first potential (V₁) in a first control state (a) of the capacitance measuring circuit of the switched capacitor type (11, 13) and by a second potential (V₂) in a second control state (b),
that the second electrode of the pressure sensor is connected to the inverting input (-) of an operational amplifier (12) of the capacitance measuring, circuit of the switched capacitor type (11, 13),
that the reference element is positioned between the inverting input (-) of the operational amplifier (12) and the output thereof and is discharged in the case of one of the two control states (a, b), and
that the non-inverting input (+) of the operational amplifier (12) has applied thereto a reference potential (ground).

18. A pressure sensor array according to claim 16, characterized in that
a first electrode of the reference element is acted upon by a first potential (V₁) in a first control state (a) of the capacitance measuring circuit of the switched capacitor type (11, 13) and by a second potential (V₂) in a second control state (b),
that the second electrode of the reference element is connected to the inverting input (-) of an operational amplifier (12) of the capacitance measuring circuit of the switched capacitor type (11, 13),
that the pressure sensor is positioned between said inverting input (-) of the operational amplifier (12) and the output thereof and is discharged in the case of one of the two control states (a, b), and
that the non-inverting input (+) of the operational amplifier (12) has applied thereto a reference potential (ground).

19. A pressure sensor array according to claim 16, characterized in that
a first electrode of the pressure sensor is, acted upon by a first potential (V₁) in a first control state (a) of the capacitance measuring circuit of the switched capacitor type (13) and by a second potential (V₂) in a second control state (b),
that a first electrode of the reference element is acted upon by a fourth potential (V₄) in a first control state (a) of the capacitance measuring circuit of the switched capacitor type and by a third potential (V₃) in a second control state (b),
that the respective second electrodes of the pressure sensor and of the reference element are connected to the non-inverting input (-) of an operational amplifier,
that an additional capacitative reference element is positioned between the inverting input (-) of the opperational amplifier (12) and the output thereof, and
that the non-inverting input (+) of the operational amplifier (12) has applied thereto a reference potential (ground).

## Revendications

1. Procédé de production d'un capteur capacitif intégrable de pression, partant d'un substrat semi-conducteur, aux étapes de procédé suivantes:
- création d'une couche d'écartement (2) déterminant une cavité de capteur de pression (3) ultérieure et se situant au-dessus d'une zone semi-conductrice (2) du substrat semi-conducteur (1),
- dépôt d'une couche semi-conductrice polycristalline (4) de telle manière qu'elle recouvre au moins partiellement la couche d'écartement (2),
- dopage de la couche semi-conductrice polycristalline (4) déposée au moins dans une zone en forme de membrane située au-dessus de la couche d'écartement (2), et
- élimination par gravure de la couche d'écartement (2),
caractérisé par les étapes de procédé suivantes:
- isolation de la zone semi-conductrice (7) du substrat semi-conducteur (1), et
- application d'une couche d'isolation (8) sur la zone semi-conductrice (7),
la couche semi-conductrice polycristalline (4) étant disposée sur la couche d'isolation (8) au-dessus de la zone semi-conductrice (7) isolée.

2. Procédé suivant la revendication 2, caractérisé en ce que l'étape de procédé consistant à isoler la zone semi-conductrice (7) du substrat semi-conducteur (1) comporte la création d'une transition pn dans le substrat semi-conducteur (1) par dopage approprié de la zone semi-conductrice (7).

3. Procédé suivant la revendication 1 ou 2, caractérisé en ce que l'étape de procédé consistant à isoler la zone semi-conductrice (7) comporte l'implantation de substances d'implantation convenant pour l'isolation, afin de créer une couche d'isolation enterrée dans le substrat semi-conducteur (1).

4. Procédé suivant la revendication 3, caractérisé en ce que les substances d'implantation comportent de l'oxygène ou de l'azote.

5. Procédé suivant la revendication 3 ou 4, caractérisé par l'étape de procédé consistant à cicatriser thermiquement la zone semi-conductrice (7) définie par la couche d'isolation enterrée, après l'étape de procédé consistant en l'implantation.

6. Procédé suivant l'une des revendications 1 à 5, caractérisé en ce que la couche d'isolation (8) présente du Si₃N₄.

7. Procédé suivant l'une des revendications 1 à 6, caractérisé en ce que la couche d'écartement (2) est réalisée de telle manière qu'elle s'étend à travers la couche semi-conductrice polycristalline (4), afin de déterminer au moins un canal gravé (5).

8. Capteur capacitif intégrable de pression, avec un substrat semiconducteur (1) et une couche semi-conductrice polycristalline (4) déterminant, avec le substrat semi-conducteur (1), une cavité de capteur de pression (3) et présentant un dopage au moins dans une zone en forme de membrane (6) située au-dessus de la cavité de capteur de pression, caractérisé en ce
qu'une couche d'isolation (8) se situe entre la couche semi-conductrice polycristalline (4), d'une part, et une zone semi-conductrice (7) située au-dessous de la couche semi-conductrice polycristalline (4), d'autre part, et
que la zone semi-conductrice (7) est isolée du substrat semiconducteur (1), de manière que la couche semi-conductrice polycristalline (4) déterminant la cavité de capteur de pression (3), sur la couche d'isolation, est isolée au-dessus de la zone semi-conductrice (7).

9. Capteur de pression suivant la revendication 8, caractérisé en ce que la zone semi-conductrice (7) est dopée de manière opposée au substrat semi-conducteur (1), afin de créer une transition pn.

10. Capteur de pression suivant la revendication 8 ou 9, caractérisé en ce qu'une couche d'isolation enterrée se situe entre la zone semi-conductrice (7) et le substrat semi-conducteur (1).

11. Capteur de pression suivant l'une des revendications 8 à 10, caractérisé en ce que le substrat semi-conducteur (1) présente du silicium, que la couche semi-conductrice polycristalline (4) présente du polysilicium et que la couche d'isolation (8) présente du Si₃N₄.

12. Installation de capteur capacitif intégrable de pression à capteur capacitif de pression suivant l'une des revendications 8 à 11, caractérisée par un élément de référence capacitif dont la structure coïncide avec celle du capteur capacitif de pression, à l'exception d'une plus grande résistance à la flexion de la couche semi-conductrice polycristalline (4) surplombant la cavité d'élément de référence (3).

13. Installation de capteur de pression suivant la revendication 12, caractérisée en ce que la couche semi-conductrice polycristalline (4) de l'élément de référence présente une épaisseur supérieure à celle de la couche semi-conductrice polycristalline (4) du capteur capacitif de pression.

14. Installation de capteur de pression suivant la revendication 12 ou 13, caractérisée en ce que la couche semi-conductrice polycristalline (4) de l'élément de référence est renforcée par une autre couche (10) destinée à augmenter sa résistance à la flexion.

15. Installation de capteur de pression suivant la revendication 12 ou 13, caractérisée par une pluralité de paires de capteur de pression et élément de référence disposées en forme de champ sur un substrat semi-conducteur (1) commun.

16. Installation de capteur de pression suivant l'une des revendications 12 à 15, caractérisée par un circuit de mesure de capacité à interrupteur et condensateur (11, 13) qui comporte le capteur de pression et l'élément de référence.

17. Installation de capteur de pression suivant la revendication 16, caractérisée en ce
que le capteur de pression est soumis à une première électrode, dans un premier état de commutation (a) du circuit de mesure de capacité à interrupteur et condensateur (11, 13), à l'admission d'un premier potentiel (V₁) et, dans un second état de commutation (b), à l'admission d'un second potentiel (V₂).
que le capteur de pression est relié, par sa seconde électrode, à l'entrée à inversion (-) d'un amplificateur opérationnel (12) du circuit de mesure de capacité à interrupteur et condensateur (11, 13),
que l'élément de référence se situe entre l'entrée à inversion (-) d'un amplificateur opérationnel (12) et sa sortie et est déchargé à l'un des deux états de commutation (a, b), et
que l'entrée sans inversion (+) de l'amplificateur opérationnel (12) est soumise à l'admission d'un potentiel de référence (masse).

18. Installation de capteur de pression suivant la revendication 16, caractérisée en ce
que l'élément de référence est soumis à une première électrode, dans un premier état de commutation (a) du circuit de mesure de capacité à interrupteur et condensateur (11, 13), à l'admission d'un premier potentiel (V₁) et, dans un second état de commutation (b), à l'admission d'un second potentiel (V₂)
que l'élément de référence est relié, par sa secode électrode, à l'entrée à inversion (-) d'un amplificateur opérationnel (12) du circuit de mesure de capacité à interrupteur et condensateur (11, 13),
que le capteur de pression se situe entre l'entrée à inversion (-) d'un amplificateur opérationnel (12) et sa sortie et est déchargé à l'un des deux états de commutation (a, b), et
que l'entrée sans inversion (+) de l'amplificateur opérationnel (12) est soumise à l'admission d'un potentiel de référence (masse).

19. Installation de capteur de pression suivant la revendication 16, caractérisée en ce
que le capteur de pression est soumis à une première électrode, dans un premier état de commutation (a) du circuit de mesure de capacité à interrupteur et condensateur (13), à l'admission d'un premier potentiel (V₁) et, dans un second état de commutation (b), à l'admission d'un second potentiel (V₂),
que l'élément de référence est soumis à une première électrode, dans un premier état de commutation (a) du circuit de mesure de capacité à interrupteur et condensateur (13), à l'admission d'un quatrième potentiel (V₄) et, dans un second état de commutation (b), à l'admission d'un troisième potentiel (V₃),
que la seconde électrode, respectivement du capteur de pression et de l'élément de référence, est reliée à l'entrée sans inversion (-) d'un amplificateur opérationnel,
qu'un autre élement capacitif de référence se situe entre l'entrée à inversion (-) de l'amplificateur opérationnel (12) et sa sortie, et que l'entrée sans inversion (+) de l'amplificateur opérationnel (12) est soumise à l'admission d'un potentiel de référence (masse).
